# EUROPÄISCHE PATENTANMELDUNG

(11) **EP 3 786 888 A1**
(43) Veröffentlichungstag der Anmeldung: **03.03.2021**
(21) Anmeldenummer: 19193782.0
(22) Anmeldetag: 27.08.2019
(51) Int. Cl.: G06T 7/11

(54) **VERFAHREN ZUR QUANTITATIVEN MAGNETRESONANZBILDGEBUNG, MAGNETRESONANZEINRICHTUNG, COMPUTERPROGRAMM UND ELEKTRONISCH LESBARER DATENTRÄGER**

(71) Anmelder: Siemens Healthcare GmbH, 91052 Erlangen (DE)
(72) Erfinder: Grodzki, David, 91058 Erlangen (DE)

(57) **Zusammenfassung**

Verfahren zur quantitativen Magnetresonanzbildgebung, wobei eine Zeitserie von Magnetresonanzbildern, die verschiedenen Zeitpunkten nach einer Anregung zugeordnet sind, eines Untersuchungsbereichs eines Patienten mit einer Magnetresonanzeinrichtung (3) aufgenommen wird, aus der Zeitserie für wenigstens ein interessierendes Voxel der Magnetresonanzbilder ein zeitlicher Signalverlauf aus den Magnetresonanzdaten aller Magnetresonanzbilder ermittelt wird und zur Ermittlung von relativen Anteilen verschiedener Kandidatenmaterialien für das wenigstens eine interessierende Voxel der jeweilige Signalverlauf mit aus einer Datenbank abgerufenen Vergleichsverläufen für die Kandidatenmaterialien abgeglichen wird,
dadurch gekennzeichnet,
dass zur automatischen Ermittlung der Kandidatenmaterialien
- in wenigstens einem der Magnetresonanzbilder und/oder einem daraus abgeleiteten Ergebnisdatensatz, insbesondere einer quantitativen Parameterkarte, wenigstens eine anatomische Landmarke im Untersuchungsbereich in Position und Orientierung detektiert wird,
- anhand der Position und Orientierung der wenigstens einen detektierten anatomischen Landmarke, der Untersuchungsbereich in anatomische Teilregionen, denen Regionsmaterialien, von denen wenigstens eines in jedem Voxel der anatomischen Teilregion vorkommt, zugeordnet sind oder werden, segmentiert wird, und
- für jedes interessierende Voxel die Regionsmaterialien der Teilregion, der das Voxel zugeordnet ist, als Kandidatenmaterialien ausgewählt werden.

## Beschreibung

Die Erfindung betrifft ein Verfahren zur quantitativen Magnetresonanzbildgebung, wobei eine Zeitserie von Magnetresonanzbildern, die verschiedenen Zeitpunkten nach einer Anregung zugeordnet sind, eines Untersuchungsbereichs eines Patienten mit einer Magnetresonanzeinrichtung aufgenommen wird, aus der Zeitserie für wenigstens ein interessierendes Voxel der Magnetresonanzbilder ein zeitlicher Signalverlauf aus den Magnetresonanzdaten aller Magnetresonanzbilder ermittelt wird und zur Ermittlung von relativen Anteilen verschiedener Kandidatenmaterialien für das wenigstens eine interessierende Voxel der jeweilige Signalverlauf mit aus einer Datenbank abgerufenen Vergleichsverläufen für die Kandidatenmaterialien abgeglichen wird. Daneben betrifft die Erfindung eine Magnetresonanzeinrichtung, ein Computerprogramm und einen elektronisch lesbaren Datenträger.

Die Magnetresonanzbildgebung stellt ein wichtiges Werkzeug insbesondere in der Medizin, beispielsweise bei der Diagnose, dar. Dabei war es bislang gängig, qualitativ gewichtete Magnetresonanzbilder aufzunehmen, beispielsweise T1-gewichtete, T2-gewichtete und/oder protonendichtegewichtete Bilder. Inzwischen wurde allerdings auch eine quantitative Magnetresonanzbildgebung vorgeschlagen, um als Ergebnis beispielsweise eine quantitative Messkarte zu erhalten, in der voxelweise Relaxationszeiten oder sonstige Materialparameter abgebildet werden, insbesondere auch ein beispielsweise aufgrund der Materialparameter ableitbares Material, das in dem Voxel vorliegt.

Ein bekanntes quantitatives Magnetresonanzbildgebungsverfahren ist das sogenannte Magnetresonanz-Fingerprinting (MRF), mit dem in einer Messung voxelweise mehrere physikalische Werte gleichzeitig gemessen werden können, beispielsweise die Relaxationszeiten T1 und T2. Hierbei werden bevorzugt mit einer Einzelschuss-Bildgebungstechnik eine große Zahl von Magnetresonanzbildern als Zeitserie nacheinander akquiriert, wobei sich über den Verlauf Messparameter wie die Repetitionszeit, Flipwinkel und dergleichen ändern, so dass abhängig von den physikalischen Eigenschaften in den durch die Voxel vermessenen Bereichen andere Signalverläufe über die Magnetresonanzbilder entstehen. Diese Signalverläufe, die auch als Fingerabdrücke bezeichnet werden, können durch Abgleich mit Vergleichsverläufen in Datenbanken einem n-Tupel physikalischer Ergebniswerte, beispielsweise Materialparameter, zugeordnet werden, insbesondere sogar einem Material in dem Voxel, das aufgrund der Ergebniswerte identifiziert wird, mithin die durch das Tupel beschriebenen physikalischen Eigenschaften aufweist.

Ein erhoffter Vorteil des Magnetresonanz-Fingerprintings ist eine gewisse Robustheit gegenüber kleineren Abweichungen beziehungsweise Fehlern im Fingerabdruck, also Signalverlauf. Diese Robustheit wird gemäß dem Stand der Technik beispielsweise zum Ausgleich von Unterabtastungsartefakten der einzelnen Magnetresonanzbilder genutzt und soll insgesamt dazu führen, dass Magnetresonanz-Fingerprinting gegenüber kleineren Bewegungen im aufzunehmenden Untersuchungsbereich insensitiv ist.

Neben diesen technischen Vorteilen bietet das Magnetresonanz-Fingerprinting zudem einen großen Vorteil in der Einfachheit der Bedienung, da für die Messung letztlich lediglich ein Start-Bedienelement und ein Stopp-Bedienelement benötigt werden. Die Reihenfolge und Art der Magnetresonanzbilder ist dann gemäß den in der Datenbank vorliegenden Vergleichsverläufen automatisch gewählt. Auf diese Weise ist das Magnetresonanz-Fingerprintingverfahren besonders attraktiv für Benutzer mit schlechter ausgebildetem Personal, die gegebenenfalls nach kostengünstigen Lösungen suchen und von Magnetresonanz-Fingerprinting angesprochen werden.

Forschungsbestrebungen bezüglich des Magnetresonanz-Fingerprintings haben inzwischen auch zu einem Verfahren geführt, mit dem eine sogenannte Subvoxelquantifizierung (bzw. Subpixelquantifizierung, je nach Benennung der Bildelemente der Magnetresonanzbilder) möglich sein ist. Dabei wird nicht länger jedem Voxel ein quantitativer Ergebniswert zugeordnet, der dem die größte Übereinstimmung aufweisenden Vergleichsverlauf zugeordnet ist, sondern es kann eine Ergebniswertverteilung, beispielsweise eine Materialverteilung, für das Voxel angegeben werden. In einer solchen Subvoxelquantifizierung, wie sie beispielsweise in dem Artikel von Anagha Vishwas Desmane et al., "Validation of Tissue Characterization in Mixed Voxels using MR Fingerprinting", Proc. Intl. Soc. Mag. Reson. Med. 22 (2014), Seite 94, beschrieben ist, werden Vergleichsverläufe anhand erwarteter Ergebnisinformation, beispielsweise dort vermutete Materialien, manuell vorgegeben. Der relative Anteil jedes Vergleichsverlaufs und somit jedes Materials an dem gemessenen Signalverlauf wird bestimmt, indem der Signalverlauf als Zusammensetzung der Vergleichsverläufe mit bestimmten Gewichten angesetzt wird und nach den Gewichten gelöst wird, beispielsweise durch Pseudoinversen-Methoden. Der Abgleich ist in diesem Fall also so zu verstehen, dass der Signalverlauf als eine Überlagerung der einzelnen ausgewählten Vergleichsverläufe verstanden wird, wobei bestimmt wird, wie stark die einzelnen, ausgewählten Vergleichsverläufe beitragen. Im Fall der Bestimmung einer Materialzusammensetzung, in dem die Ergebniswerte Anteile jeweiliger Materialien sind, geben dann die Gewichte die relativen Anteile der entsprechenden Materialien, für die die Vergleichsverläufe bereitgestellt wurden, an, und können beispielsweise als Ergebniswerte der Ergebnisinformation dienen.

Problematisch an der Subvoxelquantifizierung ist, dass die Kandidatenmaterialien manuell vorgegeben sein müssen und sich letztlich für jedes betrachtete, interessierende Voxel unterscheiden können, so dass ein äußerst großer Aufwand für den Benutzer entsteht, der dazu führen kann, dass die Akzeptanz gegenüber dem Verfahren eingeschränkt ist.

Der Erfindung liegt daher die Aufgabe zugrunde, eine demgegenüber verbesserte Möglichkeit zur Vorgabe von Kandidatenmaterialien bei einer Subvoxelquantizifierung anzugeben.

Zur Lösung dieser Aufgabe sind erfindungsgemäß ein Verfahren, eine Magnetresonanzeinrichtung, eine Computerprogramm und ein elektronisch lesbarer Datenträger gemäß den unabhängigen Ansprüchen vorgesehen. Vorteilhafte Ausgestaltungen ergeben sich aus den Unteransprüchen.

Bei einem Verfahren der eingangs genannten Art ist erfindungsgemäß vorgesehen, dass zur automatischen Ermittlung der Kandidatenmaterialien
- in wenigstens einem der Magnetresonanzbilder und/oder einem daraus abgeleiteten Ergebnisdatensatz, insbesondere einer quantitativen Parameterkarte, wenigstens eine anatomische Landmarke im Untersuchungsbereich in Position und Orientierung detektiert wird,
- anhand der Position und Orientierung der wenigstens einen detektierten anatomischen Landmarke der Untersuchungsbereich in anatomische Teilregionen, denen Regionsmaterialien, von denen wenigstens eines in jedem Voxel der anatomischen Teilregion vorkommt, zugeordnet sind oder werden, segmentiert wird, und
- für jedes interessierende Voxel die Regionsmaterialien der Teilregion, der das interessierende Voxel zugeordnet ist, als Kandidatenmaterialien ausgewählt werden.

Es wird mithin ein Vorgehen vorgeschlagen, welches die zu erwartenden, dominierenden Signalkomponenten, mithin die zu verwendenden Kandidatenmaterialien, anhand von Landmarkenverfahren, der Bildung von Teilregionen und entsprechen zugeordneten Regionsmaterialien automatisch erkennt und der Subvoxelquantifizierung zur Verfügung stellt. Dabei wird, wie grundsätzlich bekannt, zunächst eine Zeitserie von Magnetresonanzbildern, also ein Magnetresonanz-Fingerprintingdatensatz, aufgenommen, wie dies im Stand der Technik grundsätzlich bekannt sind. In diesem Magnetresonanzbildern und/oder einem daraus abgeleiteten Ergebnisdatensatz, insbesondere einer quantitativen Magnetresonanz-Fingerprintingkarte, also einer quantitativen Parameterkarte, wird nun wenigstens eine Landmarke, bevorzugt mehrere Landmarken erkannt, die bei verschiedenen Patienten im allgemeinen vergleichbar sind. Die wenigstens eine Landmarke ist dadurch gekennzeichnet, dass sie sowohl eine Lokalisierung im Untersuchungsbereich erlaubt, zum anderen aber auch die Orientierung beziehungsweise Lagerung des Untersuchungsbereichs erkennen lässt. Mit anderen Worten kann zu jeder der wenigstens einen Landmarke eine Position und eine Orientierung bestimmt werden.

Diese Landmarkeninformationen, die Ergebnis der Landmarkendetektion sind, werden nun genutzt, um den gemessenen Untersuchungsbereich in mehrere vorhandene und bekannte Teilregionen, die an den vermessenen Untersuchungsbereich angepasst sind, zu unterteilen. Die Teilregionen sind insbesondere dadurch gekennzeichnet, dass in jeder Teilregion im Allgemeinen die gleichen dominierenden Signalkomponenten, mithin Regionsmaterialien, vorliegen. Für jede Teilregion können die Regionsmaterialien, die die dominierenden Signalkomponenten in den Signalverläufen verursachen, genau wie deren physikalische Eigenschaften, einer Datenbank entnommen werden, so dass, nachdem jedes interessierende Voxel einer Teilregion zugeordnet werden kann, die entsprechenden Regionsmaterialien der dem interessierenden Voxel zugeordneten Teilregion als Kandidatenmaterialien für das interessierende Voxel herangezogen werden können. Mit anderen Worten bedeutet dies, dass für die interessierenden Voxel eine Subvoxelquantifizierung, wie oben anhand des Artikels von Anagha Vishwas Desmane et al. beschrieben, durchgeführt wird, ohne dass die dominierenden Kandidatenmaterialien manuell gesetzt werden müssen, sondern den in den vorherigen Schritten bestimmten Regionsmaterialien entsprechen - je nach Zugehörigkeit des untersuchten Voxels zu den verschiedenen Teilregionen.

Auf diese Weise entsteht eine Vorgehensweise, die automatisch die dominierenden, in einer Subvoxelquantifizierung des Magnetresonanz-Fingerprintings zu verwendenden Kandidatenmaterialien ermittelt. So ist ein einfacherer und bequemerer Einsatz möglich, so dass die Akzeptanz bei Benutzern gegebenenfalls entscheidend gesteigert werden kann.

In bevorzugter Weiterbildung der vorliegenden Erfindung kann vorgesehen sein, dass die Segmentierung durch insbesondere elastische Registrierung eines anatomischen Atlasdatensatzes, in dem die Teilregionen und die anatomischen Landmarken enthalten sind, auf den Untersuchungsbereich anhand der wenigstens einen anatomischen Landmarke erfolgt. Anatomische Atlanten für verschiedene Körperbereiche eines Patienten, mithin unterschiedliche Untersuchungsbereiche, sind im Stand der Technik bereits grundsätzlich bekannt, werden allerdings bislang meist für Auswertungsanwendungen und/oder Navigationsanwendungen eingesetzt. Ein anatomischer Atlasdatensatz, der im Rahmen der vorliegenden Erfindung eingesetzt werden kann, beschreibt letztlich die Anatomie eines "Durchschnittspatienten" im Untersuchungsbereich. Das bedeutet, der anatomische Atlasdatensatz enthält nicht nur die Landmarken, sondern relativ zu diesen auch bereits eine Aufteilung in entsprechende Teilregionen, die sich durch unterschiedliche Regionsmaterialien, anders gesagt unterschiedliche dominierende Signalkomponenten in der Magnetresonanzbildgebung, auszeichnen. Ist nun, besonders bevorzugt für mehrere anatomische Landmarken, bekannt, wo die anatomischen Landmarken im aktuell tatsächlich aufgenommene Untersuchungsbereich liegen, ist eine Registrierung, insbesondere elastische Registrierung, möglich, bei der der anatomische Atlasdatensatz so gedreht, verschoben und insbesondere auch verzerrt wird, dass die Lage der anatomischen Landmarken im anatomischen Atlasdatensatz der Lage der anatomischen Landmarken im Untersuchungsbereich, wie sie im Detektionsschritt festgestellt wurde, entspricht. Dabei werden auch die Teilregionen automatisch so angepasst, dass sie zumindest im Wesentlichen der tatsächlichen Anatomie des Untersuchungsbereichs entsprechen. Mithin kann abgelesenen werden, welcher Teilregion ein interessierendes Voxel zuzuordnen ist. Existiert nun, insbesondere als Teil des anatomischen Atlases, auch eine Datenbank, in der jeder Teilregion die entsprechenden Regionsmaterialien sowie gegebenenfalls auch ihre physikalischen Eigenschaften zugeordnet sind, können die Regionsmaterialien und somit die Kandidatenmaterialien für jedes interessierende Voxel einfach ermittelt werden.

Zusätzlich oder alternativ kann in einer zumindest bei Kombination mit einem anatomischen Atlas ebenso bevorzugten Ausführungsform auch vorgesehen sein, dass die Segmentierung durch ein Region-Growing-Verfahren, dessen wenigstens einer Startpunkt anhand der Position und Orientierung der anatomischen Landmarke gewählt wird, erfolgt. Derartige Region-Growing-Verfahren zur Segmentierung von medizinischen Bildern sind im Stand der Technik bereits grundsätzlich bekannt und können auch im Rahmen der vorliegenden Erfindung eingesetzt werden. Besonders vorteilhaft werden Region-Growing-Algorithmen dabei ergänzend zur Verwendung eines anatomischen Atlasses eingesetzt, insbesondere dann, wenn die anatomischen Landmarken, was häufig der Fall sein wird, nicht den Teilregionen entsprechen beziehungsweise nicht allen Teilregionen entsprechen, so dass nach einer Anpassung des anatomischen Atlasdatensatzes eine Verfeinerung der gegebenen Aufteilung hinsichtlich nicht ohnehin als Landmarken genau detektierten Teilregionen noch ein Region-Growing-Algorithmus eingesetzt werden kann, um die Ausdehnung einer Teilregion genauer bestimmen zu können.

Dabei ist es insgesamt im Rahmen der vorliegenden Erfindung bevorzugt, wenn im Rahmen der Segmentierung und zum Auffinden der anatomischen Landmarken eine quantitative Parameterkarte verwendet wird. Als quantitative Parameterkarte wird vorzugsweise aus den Signalverläufen eine T1-Karte und/oder eine T2-Karte und/oder eine Protonendichtekarte ermittelt. In derartige, grundsätzlich bekannte Magnetresonanz-Fingerprinting-Ergebnisse fließen mit besonderem Vorteil alle aufgenommenen Magnetresonanzbilder ein, so dass eine hervorragende Informationsmenge vorliegt, bei der Rauscheffekte schon teilweise entfernt sind, was das Auffinden der anatomischen Landmarken mit besonderem Vorteil erleichtert. Insbesondere ist es auch denkbar, mehrere quantitative Parameterkarten als Ergebnisdatensätze zur Detektion der wenigstens einen anatomischen Landmarke zu verwenden. Auf diese Weise können unterschiedliche physikalische Eigenschaften der entsprechenden Landmarke vorteilhaft berücksichtigt werden. Insgesamt nutzt die Erfindung bei der Verwendung quantitativer Paramaterkarten auch die Erkenntnis aus, dass eine besonders verlässliche Detektion von Landmarken durch die vorliegenden Fingerprintingdaten ermöglich wird. In diesem Zusammenhang kann es weiterhin auch zweckmäßig sein, zusätzlich zu solchen quantitativen Parameterkarten auch die Magnetresonanzbilder zu betrachten, insbesondere hinsichtlich einer Plausibilisierung.

Als anatomische Landmarke kann eine Gewebeform und/oder ein Knochenanteil und/oder ein Organ verwendet werden. Beispielsweise ist es bei einem wenigstens einen Teil des Kopfes des Patienten umfassenden Untersuchungsbereich denkbar, als anatomische Landmarke wenigstens ein Ohr und/oder ein Auge und/oder den Hippocampus zu verwenden. Insbesondere bieten sich als anatomische Landmarken alle anatomischen Strukturen, seien es Gewebestrukturen oder andere Strukturen, an, die in Bildgebungseigenschaften der Magnetresonanzbildgebung hinreichend deutliche Unterschiede zu umliegenden anatomischen Strukturen aufweisen, was sich im Rahmen der vorliegenden Erfindung vorteilhafterweise, da ohnehin quantitative Magnetresonanzbildgebung, insbesondere Magnetresonanz-Fingerprinting, betrieben wird, auch auf quantitative Parameter wie Relaxationszeiten, Protonendichte und dergleichen beziehen kann.

In Bezug auf den Kopf oder einen Teil des Kopfes als Untersuchungsbereich ist es ferner zweckmäßig, wenn als Teilregionen eine Gehirn enthaltende Teilregion und/oder eine Luft enthaltende Teilregion und/oder eine Haut und/oder Fett und/oder Knochen enthaltende Teilregion und/oder eine Liquor enthaltende Teilregion verwendet werden. Für eine Teilregion, die dem Gehirn entspricht, können als Regionsmaterialien beispielsweise weiße Gehirnmasse, graue Gehirnmasse und Liquor angesetzt werden. Bei einer Region, die beispielsweise Haut, Fett und/oder Knochen beschreibt, können beispielsweise Blut, Gewebearten und dergleichen als Regionsmaterialien angesetzt werden. Dabei sei an dieser Stelle angemerkt, dass sich die vorliegende Erfindung nicht nur auf den Kopf anwenden lässt, sondern neben dem Gehirn auch andere Organe quantitativ untersucht werden können, beispielsweise wie Leber und/oder die Prostata. Auch in solchen Bereichen erweist sich die quantitative Magnetresonanzbildgebung als äußerst nützlich.

Bei einem konkreten Beispiel einer Kopfmessung kann das erfindungsgemäße Verfahren beispielsweise so ablaufen, dass zunächst die Zeitserie von Magnetresonanzbildern, also ein Magnetresonanz-Fingerprinting-Datensatz, von dem gewünschten Untersuchungsbereich im Kopf aufgenommen wird. So dann wird die wenigstens eine Landmarke im Kopf aufgefunden, so dass Lage und Orientierung bekannt sind. Auf dieser Grundlage kann der Untersuchungsbereich anhand der Landmarken in Teilregionen unterteilt werden, beispielsweise "Gehirn", "Haut, Fett, Knochen", "Liquor", "Luft", etc. Aus einer Datenbank oder gegebenenfalls auch einem anatomischen Atlasdatensatz selbst können dann die dominierenden Materialkomponenten, also Regionsmaterialien, der einzelnen Teilregionen abgerufen werden, beispielsweise für eine Teilregion "Gehirn" graue und weiße Hirnsubstanz und Liquor. Sodann kann die Subvoxelquantifizierung durchgeführt werden, wobei je nach Zugehörigkeit des betrachteten interessierenden Pixels die im vorherigen Schritt ermittelten Regionsmaterialien als Kandidatenmaterialien verwendet werden.

In einer vorteilhaften Weiterbildung der vorliegenden Erfindung kann vorgesehen sein, dass bei der Detektion der Landmarken zusätzlich wenigstens ein im Rahmen einer Vorbereitungsmessung aufgenommener Vorbereitungsdatensatz und/oder ein Auswertungsergebnis dieses Vorbereitungsdatensatzes verwendet wird. Zwar werden derartige Vorbereitungsdatensätze meist mit einem erhöhten Rauschen und/oder einer geringeren Auflösung aufgenommen, jedoch lassen sich dort häufig bereits Hinweise auf die zumindest ungefähre Lage von anatomischen Landmarken entnehmen, falls anatomische Landmarken nicht ohnehin als Teil der Auswertung des Vorbereitungsdatensatzes bereits ermittelt werden. Beispielsweise kann konkret vorgesehen sein, dass die Vorbereitungsmessung einer Wahl der Schichtposition und/oder Schichtorientierung für die Magnetresonanzbilder und/oder eine sonstige Magnetresonanzmessung an dem Patienten dient. Derartige Verfahren sind auch unter dem Stichwort "AutoAlign" bekannt. Dort wird, insbesondere anhand von anatomischen Landmarken, die wenigstens teilweise der wenigstens einen anatomischen Landmarke, welche im erfindungsgemäßen Verfahren verwendet wird, entsprechen kann, eine zumindest grobe Lage und Orientierung des Untersuchungsbereichs ermittelt und entsprechend Schichtpositionen und/oder Schichtorientierung gewählt.

Neben dem Verfahren betrifft die Erfindung auch eine Magnetresonanzeinrichtung, aufweisend eine zur Durchführung des erfindungsgemäßen Verfahrens ausgebildete Steuereinrichtung. Sämtliche Ausführungen bezüglich des erfindungsgemäßen Verfahrens lassen sich analog auf die erfindungsgemäße Magnetresonanzeinrichtung übertragen, mit welcher mithin ebenso die bereits genannten Vorteile erhalten werden können.

Die Steuereinrichtung kann bevorzugt wenigstens einen Prozessor und wenigstens ein Speichermittel aufweisen, wobei in dem Speichermittel beispielsweise eine Material-Datenbank, die die Zuordnung von Regionsmaterialien zu Teilregionen ermöglicht, und/oder ein anatomischer Atlasdatensatz und/oder die Fingerprinting-Datenbank mit Vergleichsverläufen gespeichert sein können. Hinsichtlich des funktionalen Aufbaus der Steuereinrichtung kann diese neben einer grundsätzlich bekannten Sequenzeinheit zur Ansteuerung anderer Komponenten der Magnetresonanzeinrichtung zur Aufnahme von Magnetresonanzdaten, insbesondere auf der Zeitserie von Magnetresonanzbildern, eine Landmarkendetektionseinheit zur Detektion der wenigstens einen anatomischen Landmarke, eine Segmentierungseinheit zur Aufteilung des Untersuchungsbereichs in anatomische Teilregionen und eine Zuordnungseinheit zur Zuordnung von Regionsmaterialien als Kandidatenmaterialien zu einem interessierenden Voxel gemäß der Teilregion, der das Voxel zugeordnet ist, aufweisen. Als weitere Funktionseinheit kann eine Auswertungseinheit vorgesehen sein, in der die Subvoxelquantifizierung (sowie gegebenenfalls andere Auswertungsvorgänge der quantitativen Magnetresonanzbildgebung) vorgenommen wird.

Ein erfindungsgemäßes Computerprogramm ist in ein Speichermittel einer Steuereinrichtung einer Magnetresonanzeinrichtung ladbar und weist Programmmittel auf, die die Schritte eines erfindungsgemäßen Verfahrens ausführen, wenn das Computerprogramm in der Steuereinrichtung der Magnetresonanzeinrichtung ausgeführt wird. Das Computerprogramm kann auf einem erfindungsgemäßen elektronisch lesbaren Datenträger gespeichert sein, welcher mithin Steuerinformationen umfasst, welche zumindest ein erfindungsgemäßes Computerprogramm umfassen und derart ausgestaltet sind, dass bei Verwendung des Datenträgers in einer Steuereinrichtung einer Magnetresonanzeinrichtung die Schritte des erfindungsgemäßen Verfahrens durchgeführt werden. Bei dem erfindungsgemäßen elektronisch lesbaren Datenträger kann es sich insbesondere um einen nichttransienten Datenträger, beispielsweise eine CD-ROM handeln.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: einen Ablaufplan eines Ausführungsbeispiels des erfindungsgemäßen Verfahrens,
- Fig. 2: eine erfindungsgemäße Magnetresonanzeinrichtung, und
- Fig. 3: den funktionalen Aufbau der Steuereinrichtung der Magnetresonanzeinrichtung nach Fig. 2.

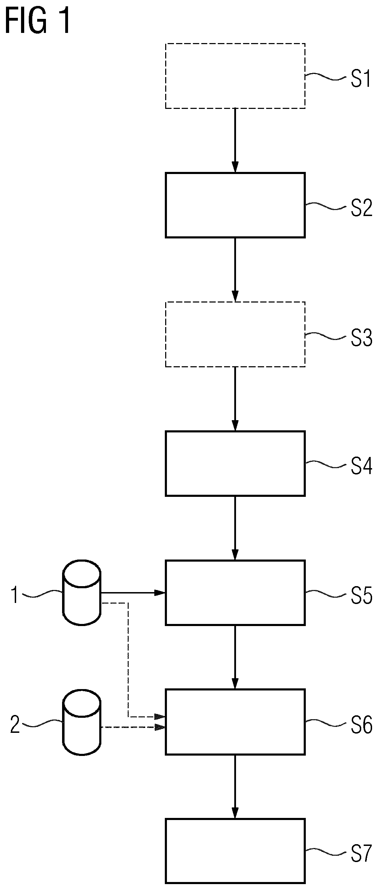

Fig. 1 zeigt einen Ablaufplan eines Ausführungsbeispiels des erfindungsgemäßen Verfahrens, bei dem innerhalb eines Kopfes eines Patienten als Untersuchungsbereich zumindest teilweise in interessierenden Voxeln eine Subvoxelquantifizierung vorgenommen werden wird, bei der verschiedene Kandidatenmaterialien durch Analyse des Signalverlaufs eines Magnetresonanz-Fingerprinting-Datensatzes, mithin einer Zeitserie von Magnetresonanzbildern, konkret einen Abgleich mit den Kandidatenmaterialien zugeordneten Vergleichsverläufen, Anteile der Kandidatenmaterialien am Inhalt des Voxels ermittelt werden sollen. Dabei bietet das im Folgenden beschriebene Ausführungsbeispiel eine Möglichkeit, geeignete Kandidatenmaterialien für die interessierenden Voxel vollständig automatisch festlegen zu können.

In einem optionalen Schritt S1 findet eine Vorbereitungsmessung statt, vorliegend, um eine Schichtorientierung und/oder eine Schichtposition für die folgende Magnetresonanz-Fingerprinting-Messung festzulegen. Dabei handelt es sich insbesondere um ein AutoAlign-Verfahren. Im Rahmen der Auswertung des in der Vorbereitungsmessung aufgenommenen Vorbereitungsdatensatzes werden bereits bestimmte anatomische Landmarken im Untersuchungsbereich zumindest grob detektiert.

In einem Schritt S2 wird, wie bei der quantitativen Magnetresonanzbildgebung üblich, eine Zeitserie von Magnetresonanzbildern des Untersuchungsbereichs aufgenommen. In einem optionalen Schritt S3 werden bereits quantitative Parameterkarten des Untersuchungsbereichs aus den sich entsprechend ergebenden Zeitverläufen bestimmt, insbesondere eine T1-Karte und/oder eine T2-Karte und/oder eine Protonendichtekarte.

In einem Schritt S4 werden die Magnetresonanzbilder und/oder bevorzugt die quantitativen Parameterkarten des Schrittes S3 ausgewertet, um bestimmte anatomische Landmarken des Kopfes aufzufinden, mithin jeweils die Position und Orientierung, insbesondere auch die Ausdehnung, der anatomischen Landmarken zu bestimmen. Vorliegend können als anatomische Landmarken beispielsweise die Ohren und/oder die Augen und/oder der Hippocampus und/oder bestimmte sonstige Knochen- und/oder Weichgewebestrukturen verwendet werden.

Diese so bestimmte Landmarkeninformation, also die Position und Orientierung der anatomischen Landmarken wird in einem Schritt S5 genutzt, um den Untersuchungsbereich in Teilregionen zu unterteilen, mithin zu segmentieren, in denen jeweils unterschiedliche dominierende Signalanteile durch unterschiedliche Regionsmaterialien entstehen. Hierzu wird vorliegend eine elastische Registrierung auf einen anatomischen Atlasdatensatz 1 vorgenommen, der neben einer Aufteilung in die entsprechenden Teilregionen bei einem "Durchschnittspatienten" auch die anatomischen Landmarken enthält. Der anatomische Atlasdatensatz 1 wird gemäß der bestimmten Position und Orientierung der anatomischen Landmarken insbesondere auch durch Verzerrung so angepasst, dass die Lage der anatomischen Landmarken der Lage im Untersuchungsbereich entspricht. Damit wurden auch die im anatomischen Atlasdatensatz enthaltenen Teilregionen bereits entsprechend angepasst, so dass die Aufteilung in Teilregionen für den Unterbereich gegeben ist. Um dies noch zu verfeinern, können gegebenenfalls für wenigstens einen Teil der Teilregionen Region-Growing-Algorithmen im Schritt S5 eingesetzt werden.

In einem Schritt S6 wird dann überprüft, in welcher Teilregion jeweilige interessierende Voxel liegen. Den Teilregionen sind, entweder in einer Material-Datenbank 2 oder bereits unmittelbar im anatomischen Atlasdatensatz 1, Regionsmaterialien zugeordnet, die das Magnetresonanzsignal in der entsprechenden Teilregion dominieren. Nachdem aufgrund der Segmentierung des Schrittes S5 jedem interessierenden Voxel eine Teilregion zugeordnet werden kann, können dem interessierenden Voxel auch Regionsmaterialien zugeordnet werden, die dann als Kandidatenmaterialien für die Subvoxelquantifizierung herangezogen werden. Beispielsweise kann für eine Teilregion "Gehirn" im konkreten Ausführungsbeispiel eine Zuordnung der Regionsmaterialien "graue Gehirnmasse", "weiße Gehirnmasse" und "Liquor" gegeben sein.

In einem Schritt S7 wird dann die Subvoxelquantifizierung mit den entsprechend automatisch ausgewählten Kandidatenmaterialien für jedes interessierende Voxel durchgeführt.

Neben dem hier dargestellten Ausführungsbeispiel des Kopfes eines Patienten kann das beschriebene Verfahren selbstverständlich auch für andere Untersuchungsbereiche umgesetzt werden, beispielsweise für die Leber und/oder die Prostata.

Wurde der optionale Schritt S1 durchgeführt, lassen sich die dort gewonnenen Informationen aus der Vorbereitungsmessung auch im Schritt S4 verwenden, um eine verbesserte Detektion der Landmarken zu ermöglichen, insbesondere einen Startpunkt für einen Detektionsalgorithmus vorzugeben.

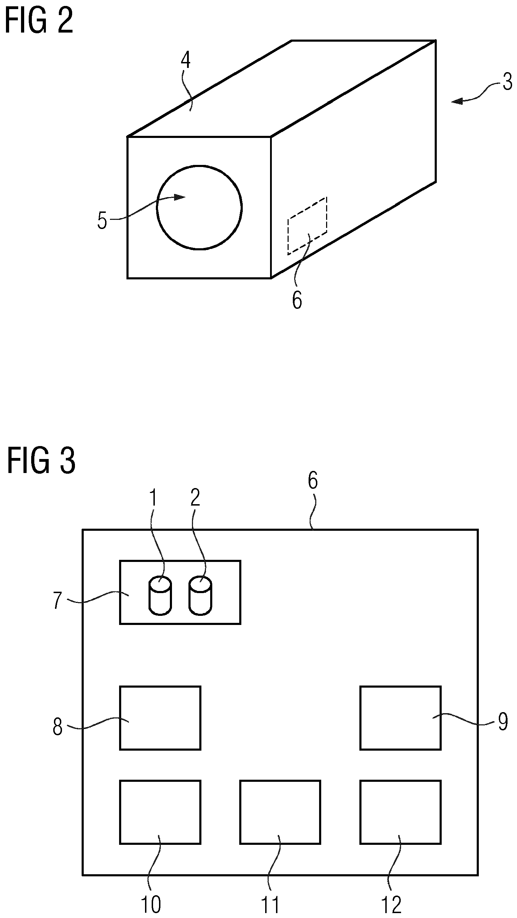

Fig. 2 zeigt eine Prinzipskizze einer erfindungsgemäßen Magnetresonanzeinrichtung 3. Diese weist, wie grundsätzlich bekannt, eine Hauptmagneteinheit 4 auf, in der eine Patientenaufnahme 5 ausgebildet ist, in die mittels einer hier nicht näher gezeigten Patientenliege ein Patient eingefahren werden kann. Die Patientenaufnahme 5 umgebend können eine Hochfrequenzspulenanordnung und eine Gradientenspulenanordnung der Magnetresonanzeinrichtung 3 angeordnet sein. Der Betrieb der Magnetresonanzeinrichtung 3 wird durch eine Steuereinrichtung 6 gesteuert, welche auch zur Durchführung des erfindungsgemäßen Verfahrens ausgebildet ist.

Fig. 3 zeigt die funktionale Struktur der Steuereinrichtung 6 genauer. Diese weist zunächst ein Speichermittel 7 auf, in dem beispielsweise neben einem erfindungsgemäßen Computerprogramm auch der anatomische Atlasdatensatz 1 und/oder die Material-Datenbank 2 gespeichert sein können, ferner auch auf eine weitere Datenbank (Fingerprinting-Datenbank), in der die Vergleichsverläufe enthalten sind, welche der Übersichtlichkeit halber hier nicht dargestellt ist.

Mittels einer Sequenzeinheit 8 kann der Aufnahmebetrieb der Magnetresonanzeinrichtung 3, insbesondere in den Schritten S1 und S2, gesteuert werden. Über eine Auswertungseinheit 9 lässt sich neben der üblichen Magnetresonanz-Fingerprinting-Methodik, mithin insbesondere der Bestimmung der quantitativen Parameterkarten im Schritt S3, auch eine Subvoxelquantifizierung (vgl. S8) durchführen.

Die Steuereinrichtung 6 umfasst zur Realisierung des erfindungsgemäßen Verfahrens ferner auch eine Detektionseinheit 10 zur Detektion der anatomischen Landmarken im Schritt S4, eine Segmentierungseinheit 11 zur Durchführung des Schrittes S5 (Aufteilung in Teilregionen) und eine Zuordnungseinheit 12, um interessierenden Voxeln aufgrund der Teilregion, in der sie sich befinden, geeignete Kandidatenmaterialien zuzuordnen, vgl. Schritt S6.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur quantitativen Magnetresonanzbildgebung, wobei eine Zeitserie von Magnetresonanzbildern, die verschiedenen Zeitpunkten nach einer Anregung zugeordnet sind, eines Untersuchungsbereichs eines Patienten mit einer Magnetresonanzeinrichtung (3) aufgenommen wird, aus der Zeitserie für wenigstens ein interessierendes Voxel der Magnetresonanzbilder ein zeitlicher Signalverlauf aus den Magnetresonanzdaten aller Magnetresonanzbilder ermittelt wird und zur Ermittlung von relativen Anteilen verschiedener Kandidatenmaterialien für das wenigstens eine interessierende Voxel der jeweilige Signalverlauf mit aus einer Datenbank abgerufenen Vergleichsverläufen für die Kandidatenmaterialien abgeglichen wird, **dadurch gekennzeichnet,**
**dass** zur automatischen Ermittlung der Kandidatenmaterialien
- in wenigstens einem der Magnetresonanzbilder und/oder einem daraus abgeleiteten Ergebnisdatensatz, insbesondere einer quantitativen Parameterkarte, wenigstens eine anatomische Landmarke im Untersuchungsbereich in Position und Orientierung detektiert wird,
- anhand der Position und Orientierung der wenigstens einen detektierten anatomischen Landmarke, der Untersuchungsbereich in anatomische Teilregionen, denen Regionsmaterialien, von denen wenigstens eines in jedem Voxel der anatomischen Teilregion vorkommt, zugeordnet sind oder werden, segmentiert wird, und
- für jedes interessierende Voxel die Regionsmaterialien der Teilregion, der das Voxel zugeordnet ist, als Kandidatenmaterialien ausgewählt werden.

2. Verfahren nach Anspruch 1, **dadurch gekennzeichnet, dass** die Segmentierung durch insbesondere elastische Registrierung eines anatomischen Atlasdatensatzes (1), in dem die Teilregionen und die anatomischen Landmarken enthalten sind, auf den Untersuchungsbereich anhand der wenigstens einen anatomischen Landmarke und/oder durch ein Region-Growing-Verfahren, dessen wenigstens einer Startpunkt anhand der Position und Orientierung der anatomischen Landmarke gewählt wird, erfolgt.

3. Verfahren nach einem der vorangehenden Ansprüche, **dadurch gekennzeichnet, dass** als die quantitative Parameterkarte aus den Signalverläufen eine T1-Karte und/oder eine T2-Karte und/oder eine Protonendichtekarte ermittelt wird.

4. Verfahren nach einem der vorangehenden Ansprüche, **dadurch gekennzeichnet, dass** als anatomische Landmarke eine Gewebeform und/oder ein Knochenanteil und/oder ein Organ verwendet wird.

5. Verfahren nach einem der vorangehenden Ansprüche, **dadurch gekennzeichnet, dass** bei einem wenigstens einen Teil des Kopfes des Patienten umfassenden Untersuchungsbereich als anatomische Landmarke wenigstens ein Ohr und/oder ein Auge und/oder der Hippocampus verwendet wird und/oder als Teilregionen eine Gehirn enthaltende Teilregion und/oder eine Luft enthaltende Teilregion und/oder eine Haut und/oder Fett und/oder Knochen enthaltende Teilregion und/oder eine Liquor enthaltende Teilregion verwendet werden.

6. Verfahren nach einem der vorangehenden Ansprüche, **dadurch gekennzeichnet, dass** bei der Detektion der Landmarken zusätzlich wenigstens ein im Rahmen einer Vorbereitungsmessung aufgenommener Vorbereitungsdatensatz und/oder ein Auswertungsergebnis dieses Vorbereitungsdatensatzes verwendet wird.

7. Verfahren nach Anspruch 6, **dadurch gekennzeichnet, dass** die Vorbereitungsmessung einer Wahl der Schichtposition und/oder Schichtorientierung dient.

8. Magnetresonanzeinrichtung (3), aufweisend eine zur Durchführung eines Verfahrens nach einem der vorangehenden Ansprüche ausgebildete Steuereinrichtung (6).

9. Computerprogramm, welches die Schritte eines Verfahrens nach einem der Ansprüche 1 bis 7 durchführt, wenn es auf der Steuereinrichtung (6) einer Magnetresonanzeinrichtung (3) ausgeführt wird.

10. Elektronisch lesbarer Datenträger, auf dem ein Computerprogramm nach Anspruch 9 gespeichert ist.
